# EUROPEAN PATENT APPLICATION

(11) **EP 2 416 555 A1**
(43) Date of publication of application: **08.02.2012**
(21) Application number: 10758496.3
(22) Date of filing: 24.03.2010
(51) Int. Cl.: H04N 1/028, H04N 5/335

(54) **SOLID-STATE IMAGE PICKUP DEVICE**

(30) Priority: 30.03.2009 JP 2009082860
(71) Applicant: Hamamatsu Photonics K.K., Hamamatsu-shi, Shizuoka 435-8558 (JP)
(72) Inventor: SUGIYAMA Yukinobu, Hamamatsu-shi Shizuoka 435-8558 (JP); OTA Keiichi, Hamamatsu-shi Shizuoka 435-8558 (JP); TONBE Takashi, Hamamatsu-shi Shizuoka 435-8558 (JP)
(74) Representative: HOFFMANN EITLE
(86) International application number: PCT/JP2010/055086
(87) International publication number: WO 2010/113722

(57) **Abstract**

A solid-state imaging device 1 according to an embodiment of the present invention, in a solid-state imaging device for which M pixel units P(1) to P(16) for performing photoelectrical conversion are arrayed, includes N holding units H(1) to H(4) (N is smaller than M) that sequentially hold output signals from different pixel units out of the M pixel units P(1) to P(16), and an amplifying section 30 that sequentially amplifies output signals from the N holding units H(1) to H(4).

## Description

### Technical Field

The present invention relates to a one-dimensional solid-state imaging device.

### Background Art

The following Patent Literature 1 describes a solid-state imaging device for which a plurality of pixel units for performing photoelectrical conversion are two-dimensionally arranged. On the other hand, there is provided, among solid-state imaging devices, as a solid-state imaging device used for reading barcodes and the like, a solid-state imaging device for which a plurality of pixel units for performing photoelectrical conversion are one-dimensionally arranged.

### Citation List

### Patent Literature

Patent Literature 1: Japanese Patent Laid-Open No. 2006-217274

### Summary of Invention

### Technical Problem

The one-dimensional solid-state imaging device can be realized by, in the two-dimensional solid-state imaging device described in the above Patent Literature 1, using one horizontal row or one vertical column out of the two-dimensionally arranged pixel units.

A one-dimensional solid-state imaging device using one horizontal row in a two-dimensional solid-state imaging device includes M holding sections for M pixel units. In this solid-state imaging device, since transfer from the pixel unit to the holding section that requires a relatively long time can be performed simultaneously for all pixel units, high-speed reading is possible. However, since the solid-state imaging device includes M holding sections, its circuit scale is increased. Moreover, the power consumption during transfer is increased.

On the other hand, a one-dimensional solid-state imaging device using one vertical column in a two-dimensional solid-state imaging device includes one holding section for M pixel units. In this solid-state imaging device, since there is only one holding section, downsizing, cost reduction, and a reduction in power consumption is possible. However, since transfer from the pixel unit to the holding section that requires a relatively long time is performed sequentially for all pixel units, the reading speed is slow.

Therefore, it is an object of the present invention to provide a solid-state imaging device that allows both downsizing and an increase in speed.

### Solution to Problem

A solid-state imaging device of the present invention, in a solid-state imaging device for which M pixel units for performing photoelectrical conversion are arrayed, includes N holding units (N is smaller than M) that sequentially hold output signals from different pixel units out of the M pixel units, and an amplifying section that sequentially amplifies output signals from the N holding units.

According to this solid-state imaging device, since the number of holding units is smaller than the number of pixel units, the circuit scale can be reduced, which allows downsizing, cost reduction, and a reduction in power consumption. Moreover, according to this solid-state imaging device, since this includes N holding units, transfer from the pixel units to the holding units that requires a relatively long time can be performed in parallel for N pixel units, which allows an increase in reading speed.

It is preferable that an n-th holding unit (n is an integer from 1 to N) of the above-described N holding units sequentially holds transfer signals transferred from M/N pixel units which are adjacent every N pixel units from an n-th pixel unit of the M pixel units, and the above-described amplifying section repeatedly performs a readout processing periodically to sequentially amplify readout signals read out of the N holding units.

According to this solid-state imaging device, the number N of holding units is determined so that the readout time required for one cycle of readout processing by the amplifying section approximates to the transfer time from pixel units to holding units, whereby an increase in speed is more appropriately enabled.

It is preferable that each of the above-described M pixel units includes a photodiode for performing photoelectrical conversion, an amplifying transistor that amplifies an output signal from the photodiode, an intra-pixel transfer transistor connected between the photodiode and the amplifying transistor, a pixel reset transistor connected between an input of the amplifying transistor and a reference voltage terminal in order to reset the amplifying transistor, and a transfer transistor connected to an output side of the amplifying transistor.

This configuration allows once holding a charge generated in the photodiode in a gate capacitor of the amplifying transistor, and thus next accumulation can be started in the photodiode. Thereby, the start and end of accumulation can be performed substantially simultaneously for all pixel units, and simultaneity in image acquisition can be secured (global shutter).

It is preferable that each of the above-described M pixel units includes a photodiode for performing photoelectrical conversion, a first amplifying transistor that amplifies an output signal from the photodiode, and a second amplifying transistor that amplifies an output signal from the first amplifying transistor, and the first amplifying transistor has a size smaller than that of the second amplifying transistor.

This configuration allows shortening the time for signal transfer from the pixel unit to the holding unit without lowering the sensitivity of the photodiode (two-stage amplifier).

It is preferable that the above-described solid-state imaging device further includes an input/output electrode that is arranged substantially at the center in an array direction of the M pixel units.

For example, when a chip has a long length in its longitudinal direction due to an increase in the number of pixels, peeling of the input/output electrode may occur due to thermal contraction and the like. However, according to this solid-state imaging device, since the input/output electrode is arranged substantially at the center, peeling due to thermal contraction and the like can be reduced.

### Advantageous Effects of Invention

The present invention allows both downsizing and an increase in speed of a solid-state imaging device.

### Brief Description of Drawings

Fig. 1 is a view showing a configuration of a solid-state imaging device according to an embodiment of the present invention.
Fig. 2 is a circuit diagram of the solid-state imaging device according to the embodiment of the present invention.
Fig. 3 is a circuit diagram of the pixel unit shown in Fig. 2.
Fig. 4 is a circuit diagram of the holding circuit shown in Fig. 2.
Fig. 5 is a circuit diagram of the amplifying section shown in Fig. 2.
Fig. 6 is a timing chart showing signal waveforms in the solid-state imaging device of the present embodiment.
Fig. 7 is a view showing the operation of the solid-state imaging device of the present embodiment.
Fig. 8 is a circuit diagram of a pixel unit according to a modification of the present invention.
Fig. 9 is a circuit diagram of a holding circuit according to the modification of the present invention.

### Description of Embodiments

Hereinafter, preferred embodiments of the present invention will be described in detail with reference to the drawings. Also, the same or corresponding parts will be denoted with the same reference numerals in the drawings.

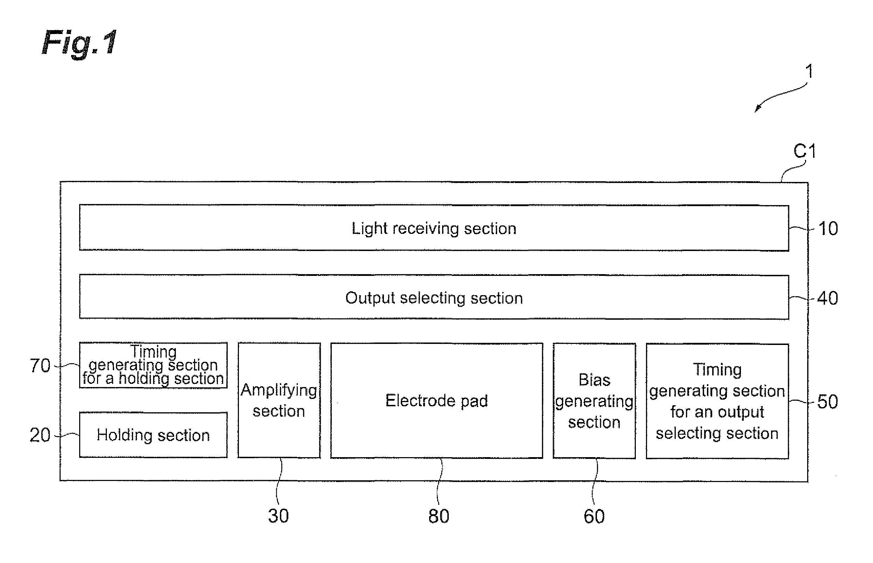

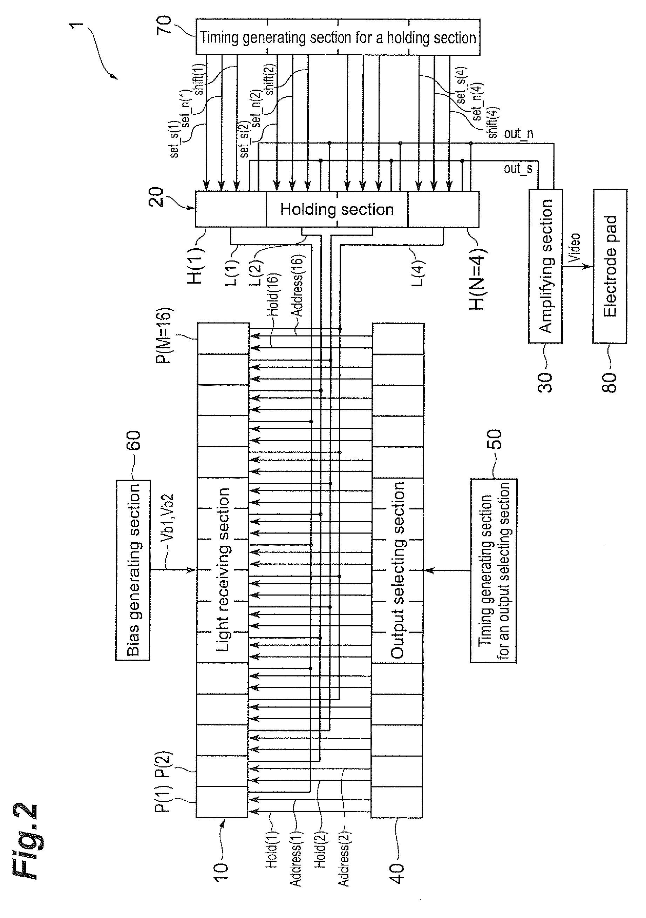

Fig. 1 is a view showing a configuration of a solid-state imaging device according to an embodiment of the present invention, and Fig. 2 is a circuit diagram of the solid-state imaging device according to the embodiment of the present invention. The solid-state imaging device 1 shown in Fig. 1 and Fig. 2 includes a light receiving section 10, a holding section 20, an amplifying section 30, an output selecting section 40, a timing generating section 50 for an output selecting section, a bias generating section 60, a timing generating section 70 for a holding section, and an electrode pad (input/output electrode) 80.

The light receiving section 10 is for taking an image of incident light, and includes M pixel units P(1) to P(M=16) arrayed in one horizontal row, that is, in the longitudinal direction of an 1C chip C1. The pixel units P(1) to P(M) have a common configuration, and each includes a photodiode that generates charge of an amount according to the amount of incident light, and an intra-pixel charge holding unit that holds said charge. The light receiving section 10 performs intra-pixel transfer of a charge from the photodiode to the intra-pixel charge holding unit, transfer of a charge from the intra-pixel charge holding unit to the holding section 20, and the like according to control signals (a Trans signal, a Reset signal, Hold(m) signal, and Address(m) signal to be described later) output from the output selecting section 40. The output selecting section 40, as a result of receiving a control signal from the timing generating section 50 for an output selecting section, controls the timing of intra-pixel transfer of a charge, transfer of a charge to the holding section 20, and the like. In addition, the pixel units P(1) to P(M) in the light receiving section 10 operate by receiving bias voltages (reference voltages Vb1 and Vb2 to be described later) generated by the bias generating section 60.

The holding section 20 includes N holding circuits H(1) to H(N=4) having a common configuration. In addition, the holding units described in the claims mean these holding circuits H(1) to H(N). The n-th holding circuit (n=1 to N) of the holding circuits H(1) to H(N) is connected to M/N pixel units adjacent every N pixel units from the n-th pixel unit of the pixel units P(1) to P(M). For example, where M=16 and N=4, the first holding circuit H(1) is connected to four pixel units P(1), P(5), P(9), and P(13) adjacent every four pixel units from the first pixel unit P(1), and the second holding circuit H(2) is connected to four pixel units P(2), P(6), P(10), and P(14) adjacent every four pixel units from the second pixel unit P(2). Moreover, the third holding circuit H(3) is connected to four pixel units P(3), P(7), P(11), and P(15) adjacent every four pixel units from the third pixel unit P(3), and the fourth holding circuit H(4) is connected to four pixel units P(4), P(8), P(12), and P(16) adjacent every four pixel units from the fourth pixel unit P(4).

The holding circuits H(1) to H(N) sequentially receive voltages transferred from the connected M/N pixel units, and hold these voltage values. Moreover, the holding circuits H(1) to H(N) can hold not only voltage values representing signal components superimposed with noise components but also voltage values representing noise components. The holding circuits H(1) to H(N) are controlled in terms of holding timing according to control signals (a set_s(n) signal, set_n(n) signal, and shift(n) signal to be described later) from the timing generating section 70 for a holding section.

The amplifying section 30 repeatedly performs a readout processing periodically to sequentially receive voltages read out of the holding section 20, that is, the holding circuits H(1) to H(N), and amplify these voltage values. For example, the amplifying section 30 sequentially amplifies/outputs voltage values of the pixel units P(1), P(2), P(3), and P(4) sequentially read out of the holding circuits H(1) to H(4), then sequentially amplifies/outputs voltage values of the pixel units P(5), P(6), P(7), and P(8) again sequentially read out of the holding circuits H(1) to H(4), and thereafter sequentially amplifies/outputs voltage values of the pixel units P(9), P(10), P(11), and P(12) again sequentially read out of the holding circuits H(1) to H(4), and further thereafter sequentially amplifies/outputs voltage values of the pixel units P(13), P(14), P(15), and P(16) again sequentially read out of the holding circuits H(1) to H(4). The amplifying section 30 outputs the amplified voltages to the outside via the electrode pad 80.

Next, the pixel units P(1) to P(M), the holding circuits H(1) to H(N), and the amplifying section 30 will be described in detail.

Here, practically, a solid-state imaging device including M=2800 pixel units and N=8 holding circuits is considered, for example. However, in the following, for simplification of description, the number of pixel units is provided as M=16, and the number of holding circuits is provided as N=4.

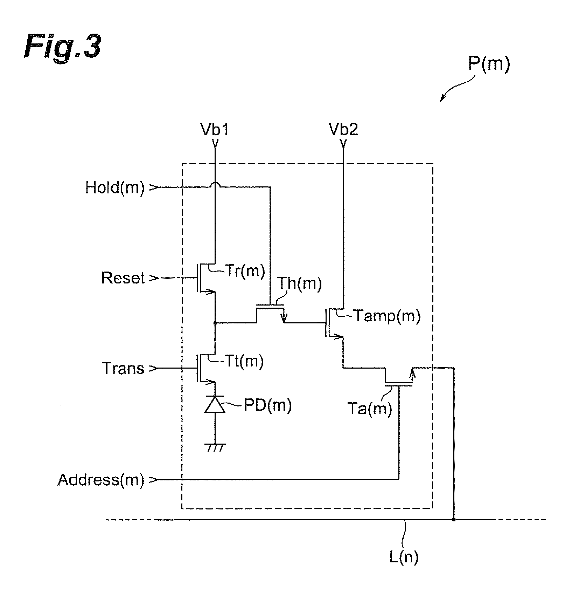

Fig. 3 is a circuit diagram of the pixel units P(1) to P(16). In Fig. 3, the m-th pixel unit P(m) is shown (m=1 to 16) as a representative of the 16 pixel units P(1) to P(16). The pixel unit P(m) uses an APS (Active Pixel Sensor) system, and includes a photodiode PD(m) and MOS transistors Tt(m), Tr(m), Th(m), Th(m), Ta(m), and Tamp(m).

The cathode of the photodiode PD(m) is input with a reference voltage Vb1 via the transistor Tt(m) and transistor Tr(m) that are connected in series, and the anode thereof is grounded. A node between the transistor Tt(m) and transistor Tr(m) is connected to the gate of the amplifying transistor Tamp(m) via the intra-pixel transfer transistor Th(m). The drain of the amplifying transistor Tamp(m) is input with a reference voltage Vb2, and the source thereof is connected to a wiring L(n) via the transfer transistor Ta(m).

The gate of the transistor Tt(m) is input with a Trans signal, and the gate of the transistor Tr(m) is input with a Reset signal. Moreover, the gate of the transistor Th(m) is input with a Hold(m) signal, and the gate of the transistor Ta(m) is input with an Address(m) signal. The Trans signal, Reset signal, Hold(m) signal, and Address(m) signal are supplied from the output selecting section 40. In addition, the reference voltages Vb1 and Vb2 are supplied from the bias generating section 60.

When the Reset signal and Trans signal become high level, the photodiodes PD(1) to PD(16) are reset to the reference potential (Vb1). When the Trans signal becomes low level, charge is generated in the photodiodes PD(1) to PD(16) according to the amount of external light to start accumulation. When the Trans signal and Hold(1) to Hold(16) signals become high level, intra-pixel transfer of the charge from the photodiodes PD(1) to PD(16) to gate capacitors (intra-pixel charge holding units) of the amplifying transistors Tamp(1) to Tamp(16) is performed. Thereby, an operation in a global shutter mode where accumulation starts and ends substantially simultaneously in all pixel units is realized.

Voltage values according to the amounts of charge held in the gate capacitor of the amplifying transistor Tamp(m) are, by closing the transistor Ta(m), sequentially output as signal components to the wiring L(n). In addition, by making the Reset signal and Hold(m) signal high level, the gate capacitor of the amplifying transistor Tamp(m) is reset. By closing the transistor Ta(m) in this state, a noise component can be output from the pixel unit P(m) to the wiring L(n).

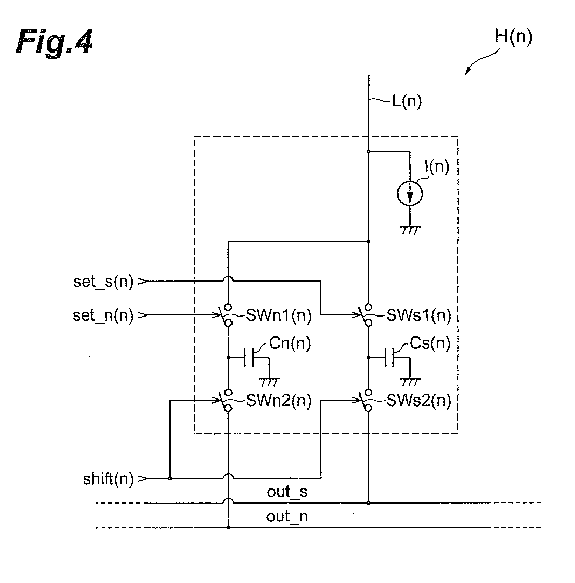

Fig. 4 is a circuit diagram of the holding circuits H(1) to H(4). In Fig. 4, the n-th holding circuit H(n) is shown (n=1 to 4) as a representative of the 4 holding circuits H(1) to H(4).

The holding circuit H(n) includes a capacitor element Cs(n) for holding a signal component output from the pixel unit P(m) and switches SWs1(n) and SWs2(n). The holding circuit H(n) also includes a capacitor element Cn(n) for holding a noise component output from the pixel unit P(m) and switches SWn1(n) and SWn2(n). The holding circuit H(n) includes a constant current source I(n).

The switch SWs1(n) and switch SWs2(n) are connected in series between the wiring L(n) and a wiring out_s. A node between the switch SWs1(n) and switch SWs2(n) is connected with one terminal of the capacitor element Cs(n), and the other terminal of the capacitor element Cs(n) is grounded. Similarly, the switch SWn1(n) and switch SWn2(n) are connected between the wiring L(n) and a wiring out_n. A node between the switch SWn1(n) and switch SWn2(n) is connected with one terminal of the capacitor element Cn(n), and the other terminal of the capacitor element Cn(n) is grounded.

The switch SWs1(n) opens and closes in response to a set_s(n) signal, and the switch SWn1(n) opens and closes in response to a set_n(n) signal. Moreover, the switches SWs2(n) and SWn2(n) open and close in response to a shift(n) signal. The set_s signal, set_n signal, and shift(n) signal are supplied from the timing generating section 70 for a holding section.

The constant current source I(n) is connected to the wiring L(n). Thus, as a result of the constant current source I(n) being provided not at an output stage of the pixel unit P(m) but at an input stage of the holding circuit H(n), a current signal is transmitted and received between the pixel unit P(m) and the holding circuit H(n). The current signal has a small signal degradation due to the capacitance of a wiring and the like as compared with a voltage signal, and thus this configuration allows reducing a signal degradation due to the capacitance of the wiring L(n) and the like.

In this holding circuit H(n), as a result of the switch SWs1(n) closing/opening in response to the set_s signal, a signal component output from the pixel unit P(m) is accumulated/held in the capacitor element Cs(n). Then, when the switch SWs2(n) closes in response to the shift(n) signal, the voltage value that has been held by the capacitor element Cs(n) is output to the wiring out_s. On the other hand, as a result of the switch SWn1(n) closing/opening in response to the set_n signal, a noise component output from the pixel unit P(m) is accumulated/held in the capacitor element Cn(n). Then, when the switch SWn2(n) closes in response to the shift(n) signal, the voltage value that has been held by the capacitor element Cn(n) is output to the wiring out_n.

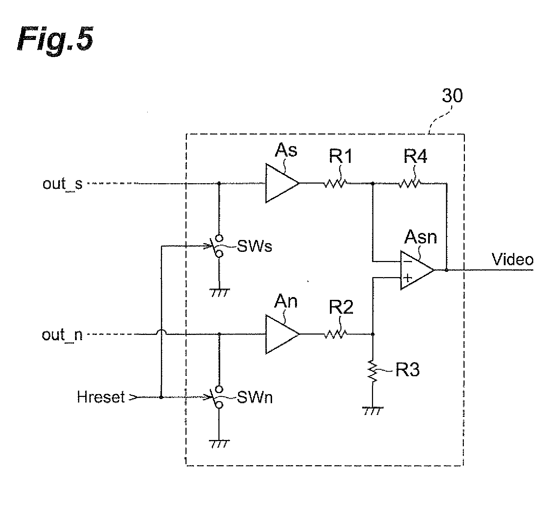

Fig. 5 is a circuit diagram of the amplifying section 30. The amplifying section 30 shown in Fig. 5 includes amplifiers As and An, a differential amplifier Asn, switches SWs and SWn, and resistance elements R1 to R4.

An input terminal of the amplifier As is connected to the wiring out_s, and an output terminal thereof is connected to an inverting input terminal of the differential amplifier Asn via the resistance element R1. Similarly, an input terminal of the amplifier An is connected to the wiring out_n, and an output terminal thereof is connected to a non-inverting input terminal of the differential amplifier Asn via the resistance element R2. The non-inverting input terminal of the differential amplifier Asn is grounded via the resistance element R3, and the non-inverting input terminal of the differential amplifier Asn is input with a voltage for which an output signal of the amplifier An is divided by a series circuit of the resistance elements R2 and R3. Moreover, the feedback resistance element R4 is connected between the output terminal and inverting input terminal of the differential amplifier Asn, and the output terminal of the differential amplifier Asn is connected to a video output wiring Video.

Moreover, between the input terminals of the amplifiers As and An and ground potentials, switches SWs and SWn are connected, respectively. The switches SWs and SWn open and close in response to an Hreset signal. When the switches SWs and SWn close, the input terminals of the amplifiers As and An are reset, respectively.

When the switches SWs and SWn are open, the amplifiers As and An receive a signal component and noise component output from the holding circuit H(n), and the signal component from which the noise component has been removed by the differential amplifier Asn is output.

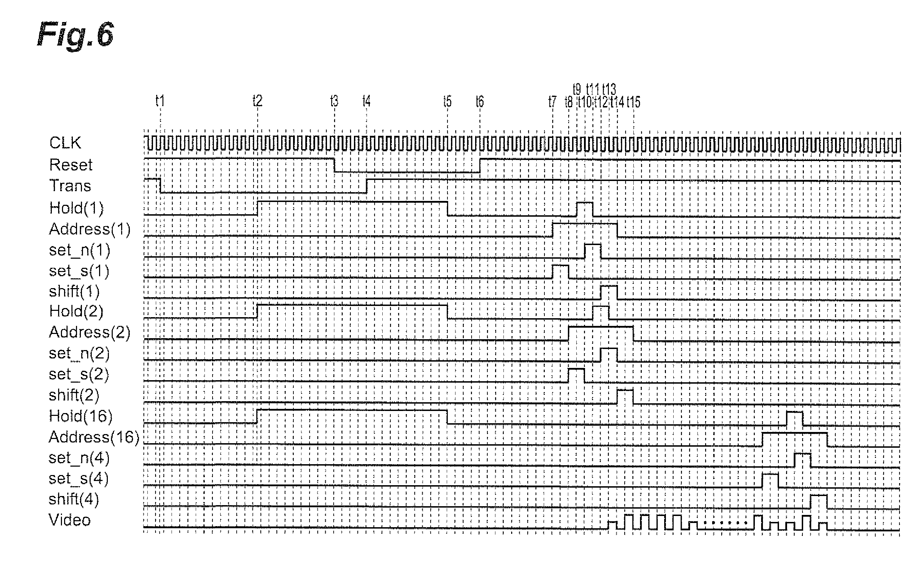

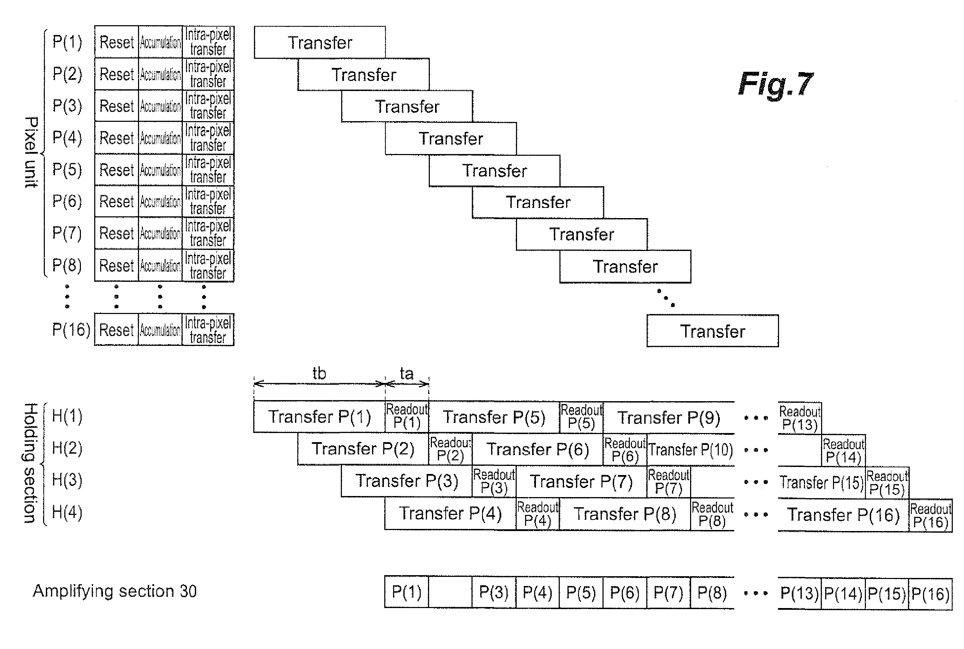

Next, the operation of the solid-state imaging device 1 of the present embodiment will be described. Fig. 6 is a timing chart showing signal waveforms in the solid-state imaging device, and Fig. 7 is a view showing the operation of the solid-state imaging device.

### (Reset and charge accumulation of pixel units P(1) to P(16))

As shown in Fig. 6, before time t1, that is, in a period where the Reset signal and Trans signal are high level, the photodiodes PD(1) to PD(16) are reset in the pixel units P(1) to P(16). When the Trans signal becomes low level at time t1, the reset of the photodiodes PD(1) to PD(16) ends.

Next, in a period t1 to t5, charge is accumulated in the 16 photodiodes PD(1) to PD(16). Of the accumulation period t1 to t5, by making the Reset signal and Hold(1) to Hold(16) signals high level for a period t2 to t3, the gate capacitors of the amplifying transistors Tamp(1) to Tamp(16) are reset. Moreover, in the last period of the accumulation period t1 to t5, that is, the period t4 to t5, when the Trans signal and Hold(1) to Hold(16) signals become high level, intra-pixel transfer of the charge is performed from the photodiodes PD(1) to PD(16) to the gate capacitors (intra-pixel charge holding units) of the amplifying transistors Tamp(1) to Tamp(16) of the respective pixels.

Next, at time t6, when the Trans signal and Reset signal become high level, the photodiodes PD(1) to PD(16) are reset to a reset potential (Vb1).

### (Charge transfer and charge readout by pixel unit P(1) and holding circuit H(1))

In a period t7 to t8, when the Address(1) signal and set_s(1) signal become high level, a charge (signal component) according to the charge that has been held in the gate capacitor of the amplifying transistor Tamp(1) in the pixel unit P(1) is transferred to the capacitor element Cs(1) in the holding circuit H(1).

Next, in a period t9 to t11, when the Hold(1) signal becomes high level, the gate capacitor of the amplifying transistor Tamp(1) is reset. Moreover, in a period t10 to t12, when the Address(1) signal and set_n(1) signal become high level, a noise component from the pixel unit P(1) is transferred to the capacitor element Cn(1) in the holding circuit H(1).

Next, in a period t12 to t14, when the shift(1) signal becomes high level, not only is the signal component read out to the amplifying section 30 from the capacitor element Cs(1) in the holding circuit H(1), but the noise component is also read out to the amplifying section 30 from the capacitor element Cn(1). Then, by the amplifying section 30, the signal component from which the noise component is removed is output.

### (Charge transfer and charge readout by pixel unit P(2) and holding circuit H(2))

In a period t8 to t10, when the Address(2) signal and set_s(2) signal become high level, a charge (signal component) according to the charge that has been held in the gate capacitor of the amplifying transistor Tamp(2) in the pixel unit P(2) is transferred to the capacitor element Cs(2) in the holding circuit H(2).

Next, in a period t1 to t13, when the Hold(2) signal becomes high level, the gate capacitor of the amplifying transistor Tamp(2) is reset. Moreover, in a period t12 to t14, when the Address(2) signal and set_n(2) signal become high level, a noise component from the pixel unit P(2) is transferred to the capacitor element Cn(2) in the holding circuit H(2).

Next, in a period t14 to t15, when the shift(2) signal becomes high level, not only is the signal component read out to the amplifying section 30 from the capacitor element Cs(2) in the holding circuit H(2), but the noise component is also read out to the amplifying section 30 from the capacitor element Cn(2). Then, by the amplifying section 30, the signal component from which the noise component has been removed is output.

Thus, charge transfer and charge readout by the pixel units P(1) to P(16) and the holding circuits H(1) to H(4) are performed sequentially for the pixel units P(1) to P(16).

As shown in Fig. 7, the pixel units P(1) to P(16), by gradually delaying the transfer start time, sequentially perform charge transfer.

The holding circuit H(1) sequentially holds and sequentially reads out voltages transferred from pixel units P(1), P(5), P(9), and P(13), four pixel units P(1), P(5), P(9), and P(13) adjacent every four pixel units from the pixel unit P(1). The holding circuit H(2) sequentially holds and sequentially reads out voltages transferred from pixel units P(2), P(6), P(10), and P(14), four pixel units P(2), P(6), P(10), and P(14) adjacent every four pixel units from the pixel unit P(2). The holding circuit H(3) sequentially holds and sequentially reads out voltages transferred from pixel units P(3), P(7), P(11), and P(15), four pixel units P(3), P(7), P(11), and P(15) adjacent every four pixel units from the pixel unit P(3). The holding circuit H(4) sequentially holds and sequentially reads out voltages transferred from pixel units P(4), P(8), P(12), and P(16), four pixel units P(4), P(8), P(12), and P(16) adjacent every four pixel units from the pixel unit P(4).

The amplifying section 30 sequentially amplifies/outputs voltage values of the pixel units P(1), P(2), P(3), and P(4) sequentially read out of the holding circuits H(1) to H(4), then sequentially amplifies/outputs voltage values of the pixel units P(5), P(6), P(7), and P(8) again sequentially read out of the holding circuits H(1) to H(4), and thereafter sequentially amplifies/outputs voltage values of the pixel units P(9), P(10), P(11), and P(12) again sequentially read out of the holding circuits H(1) to H(4), and further thereafter sequentially amplifies/outputs voltage values of the pixel units P(13), P(14), P(15), and P(16) again sequentially read out of the holding circuits H(1) to H(4). That is, the amplifying section 30 repeatedly performs a readout processing periodically to sequentially receive voltages read out of the holding circuits H(1) to H(N), and amplify these voltage values.

When one cycle of readout processing of the amplifying section 30 is provided as ta, the transfer time from each of the pixel units P(1) to P(16) to each of the holding circuits H(1) to H(4) is provided as tb, one cycle ta of readout processing and the transfer time tb are set so as to satisfy: $tb = 3 \times ta = \left(N-1\right) \times ta$ Thereby, while the amplifying section 30 is performing readout from any holding circuit out of the holding circuits H(1) to H(4), transfer is performed in other circuits, so that a sufficient transfer time tb can be secured.

According to the solid-state imaging device 1 of the present embodiment, since the number of holding circuits H(1) to H(4) is smaller than the number of pixel units P(1) to P(16), the circuit scale can be reduced, which allows downsizing, cost reduction, and a reduction in power consumption during transfer. Moreover, according to the solid-state imaging device 1 of the present embodiment, since this includes four holding circuits, transfer from the pixel units P(1) to P(16) to the holding circuits H(1) to H(4) that requires a relatively long time can be performed in parallel for four pixel units, which allows an increase in reading speed.

Moreover, since the number N of holding circuits is determined so that the readout time ta required for one cycle of readout processing by the amplifying section 30 becomes (1/(N-1)) times as long as the transfer time tb from each of the pixel units P(1) to P(M) to each of the holding circuits H(1) to H(N), even when the transfer time is relatively long, a more appropriate increase in speed is enabled.

Here, in a mode of including one holding circuit for M pixel units, as in the one-dimensional solid-state imaging device using one vertical column in the two-dimensional solid-state imaging device described in Patent Literature 1, it is difficult to arrange the holding circuit close to the pixel units.

However, according to the solid-state imaging device 1 of the present embodiment, since each of the holding circuits H(1) to H(4) can be arranged relatively close to the pixel units P(1) to P(16), the wiring from the pixel units P(1) to P(16) to the holding circuits H(1) to H(4) can be shortened, and the wiring capacitance can be reduced. As a result, the transfer time can be shortened, which allows an increase in reading speed.

Moreover, in a mode of including M holding circuits for M pixel units, as in the one-dimensional solid-state imaging device using one horizontal row in the two-dimensional solid-state imaging device described in Patent Literature 1, due to the IC chip shape, holding capacitor elements result in slender shapes, so that capacitance values have a large variation.

However, according to the solid-state imaging device 1 of the present embodiment, since the holding capacitor elements Cs(1) to Cs(4) and Cn(1) to Cn(4) in each of the holding circuits H(1) to H(4) can be made into relatively square shapes, variation in capacitance values can be relatively reduced, and as a result, variation in holding circuits H(1) to H(4) can be reduced.

Next, a layout of the solid-state imaging device 1 of the present embodiment will be described in detail by using Fig. 1. The light receiving section 10, that is, the 16 pixel units P(1) to P(16) are arrayed in a line in the longitudinal direction of the IC chip Cl, and the output selecting section 40 is also arrayed, adjacent to the pixel units P(1) to P(16), in a line in the longitudinal direction of the 1C chip C1. Under the pixel units P(1) to P(16) and the output selecting section 40, the holding section 20, the amplifying section 30, the timing generating section 50 for an output selecting section, the bias generating section 60, the timing generating section 70 for a holding section, and the electrode pad (input/output electrode) 80 are arranged.

The electrode pad 80 is arranged about the center in the longitudinal direction of the IC chip C1. The amplifying section 30 is arranged in the immediate vicinity of one side of the electrode pad 80, and the holding section 20 is arranged in the immediate vicinity of the amplifying section 30. Moreover, in the immediate vicinity of the holding section 20, the timing generating section 70 for a holding section is arranged. On the other hand, the bias generating section 60 and the timing generating section 50 for an output selecting section are arranged on the other side of the electrode pad 80.

This IC chip C 1 has a horizontally long shape that is long in the longitudinal direction. In such a horizontally long shape, as a result of thermal treatment by an assembly process and the like, the IC chip C1 greatly expands and contracts in the longitudinal direction, and as a result, peeling of an electrode pad may occur. However, according to the solid-state imaging device 1 of the present embodiment, since the electrode pad 80 is arranged about the center in the longitudinal direction of the IC chip C1, peeling due to thermal contraction can be reduced.

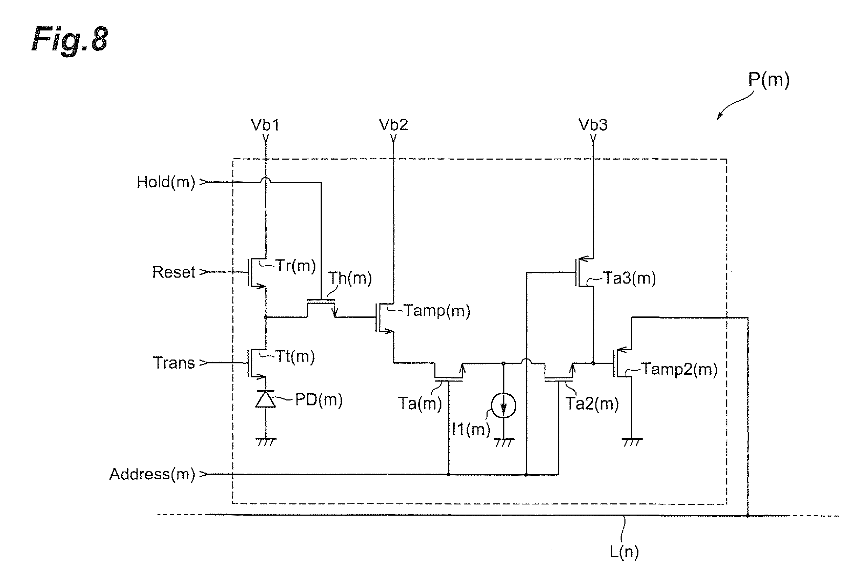

In addition, the present invention is not limited to the present embodiment described above, and various modifications can be made. For example, in the present embodiment, the pixel unit P(m) uses a single-stage amplifier configuration where the same includes one amplifying transistor Tamp(m) as shown in Fig. 3, but there may be a mode of a pixel unit including a plurality of amplifying transistors. A pixel unit using a two-stage amplifier configuration where the same includes two amplifying transistors is shown in Fig. 8.

As shown in Fig. 8, a pixel unit P(m) of a two-stage amplifier configuration further includes transistors Tamp2(m), Ta2(m), and Ta3(m), and a constant current source I1(m) in the pixel unit P(m) of a single-stage amplifier configuration. The emitter of the transistor Ta(m) is connected to the gate of the second amplifying transistor Tamp2(m) via the transistor Ta2(m), and the gate of the second amplifying transistor Tamp2(m) is input with a reference voltage Vb3 via the transistor Ta3(m). The collector of the second amplifying transistor Tamp2(m) is grounded, and the emitter thereof is connected to the wiring L(n). The emitter of the transistor Ta(m) is connected with the constant current source I1(m). The gates of the transistors Ta2(m) and Ta3(m) are input with an Address(m) signal.

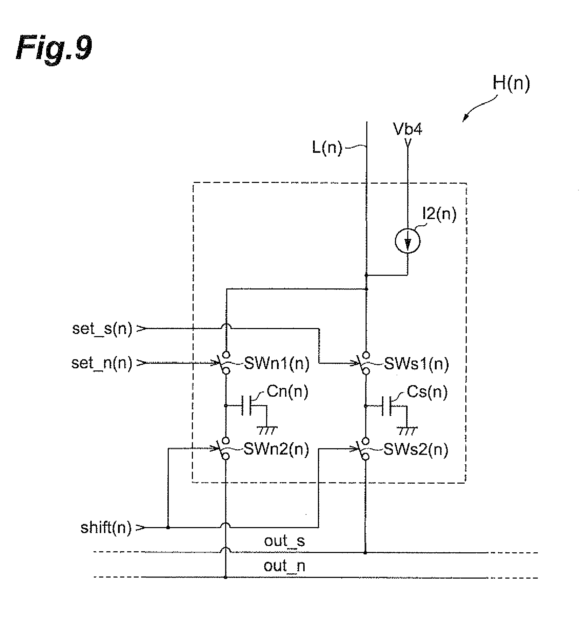

It is necessary that a holding circuit H(n) to be connected to this pixel unit P(m) of a two-stage amplifier configuration includes, as shown in Fig. 9, a constant current source 12(n) connected to a reference voltage Vb4 in place of the constant current source I(n) in the holding circuit H(n) shown in Fig. 4.

Meanwhile, in the single-amplifier configuration shown in Fig. 3, when the size of the amplifying transistor Tamp(m) is increased, due to the gate capacitor of the amplifying transistor Tamp(m), the charge-voltage conversion factor of the photodiode PD(m) is degraded, and the sensitivity is degraded. For this reason, the size of the amplifying transistor Tamp(m) cannot be increased, and a current that is made to flow into the wiring L(n) is limited.

Therefore, in the two-stage amplifier configuration shown in Fig. 8, not only is the size of the first amplifying transistor Tamp(m) reduced, but the size of the second amplifying transistor Tamp2(m) is also increased larger than that of the first amplifying transistor Tamp(m).

This configuration allows supplying a relatively large current to the wiring L(n) without lowering the sensitivity of the photodiode PD(m). As a result, the time for signal transfer to the holding circuit H(n) can be shortened.

### Industrial Applicability

The present invention can be applied to a purpose that allows both downsizing and an increase in speed of a solid-state imaging device.

### Reference Signs List

1 Solid-state imaging device
10 Light receiving section
20 Holding section
30 Amplifying section
40 Output selecting section
50 Timing generating section for an output selecting section
60 Bias generating section
70 Timing generating section for a holding section
80 Electrode pad
C1 IC chip
P(m) Pixel unit
PD(m) Photodiode
Ta(m), Ta2(m), Ta3(m) Transfer transistor
Tamp(m) Amplifying transistor (first amplifying transistor)
Tamp2(m) Second amplifying transistor
Th(m) Intra-pixel transfer transistor
Tr(m), Tt(m) Transistor
I1(m) Constant current source
H(n) Holding circuit (holding section)
Cn(n), Cs(n) Capacitor element
SWn1(n), SWn2(n), SWs1(n), SWs2(n) Switch
I(n), I2(n) Constant current source
An, As Amplifier
Asn Error amplifier
R1 to R4 Resistor element
SWs, SWn Switch

## Claims

1. A solid-state imaging device for which M pixel units for performing photoelectrical conversion are arrayed, comprising:
N holding units (N is smaller than M) that sequentially hold output signals from different pixel units out of the M pixel units; and
an amplifying section that sequentially amplifies output signals from the N holding units.

2. The solid-state imaging device according to claim 1, wherein
an n-th holding unit (n is an integer from 1 to N) of the N holding units sequentially holds transfer signals transferred from M/N pixel units which are adjacent every N pixel units from an n-th pixel unit of the M pixel units, and
the amplifying section repeatedly performs a readout processing periodically to sequentially amplify readout signals read out of the N holding units.

3. The solid-state imaging device according to claim 1, wherein
each of the M pixel units comprises:
a photodiode for performing photoelectrical conversion;
an amplifying transistor that amplifies an output signal from the photodiode;
an intra-pixel transfer transistor connected between the photodiode and the amplifying transistor;
a pixel reset transistor connected between an input of the amplifying transistor and a reference voltage terminal in order to reset the amplifying transistor; and
a transfer transistor connected to an output side of the amplifying transistor.

4. The solid-state imaging device according to claim 1, wherein
each of the M pixel units comprises:
a photodiode for performing photoelectrical conversion;
a first amplifying transistor that amplifies an output signal from the photodiode; and
a second amplifying transistor that amplifies an output signal from the first amplifying transistor, and
the first amplifying transistor has a size smaller than that of the second amplifying transistor.

5. The solid-state imaging device according to claim 1, further comprising an input/output electrode that is arranged substantially at the center in an array direction of the M pixel units.
